(19) Europäisches Patentamt / European Patent Office / Office européen des brevets

(11) **EP 2 771 551 B1**

(12) **FASCICULE DE BREVET EUROPEEN**

(45) Date de publication et mention de la délivrance du brevet:
**16.12.2015 Bulletin 2015/51**

(21) Numéro de dépôt: **12775803.5**

(22) Date de dépôt: **01.10.2012**

(51) Int Cl.:
***F01N 3/20*** *(2006.01)*

(86) Numéro de dépôt international:
**PCT/FR2012/052221**

(87) Numéro de publication internationale:
**WO 2013/060958 (02.05.2013 Gazette 2013/18)**

(54) **PROCEDE ET DISPOSITIF DE REGLAGE DE LA CONSOMMATION D'AGENT DE DEPOLLUTION D'UNE LIGNE D'ECHAPPEMENT D'UN VEHICULE HYBRIDE SELON LES DIFFERENTS MODES DE PROPULSION**

VERFAHREN UND VORRICHTUNG ZUR EINSTELLUNG DES VERBRAUCHS EINES VERSCHMUTZUNGSENTFERNUNGSMITTELS DURCH EINE ABGASLEITUNG EINES HYBRIDFAHRZEUGS ENTSPRECHEND VERSCHIEDENEN ANTRIEBSMODI

METHOD AND DEVICE FOR ADJUSTING THE CONSUMPTION OF A POLLUTION-REMOVING AGENT BY AN EXHAUST LINE OF A HYBRID VEHICLE ACCORDING TO THE VARIOUS PROPULSION MODES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2011 FR 1159631**

(43) Date de publication de la demande:
**03.09.2014 Bulletin 2014/36**

(73) Titulaire: **Peugeot Citroën Automobiles SA
78140 Vélizy Villacoublay (FR)**

(72) Inventeurs:
• **GAILLARD, Patrick
95550 Bessancourt (FR)**
• **SOUCHON, Vincent
F-92600 Asnières sur Seine (FR)**

(56) Documents cités:
**FR-A1- 2 929 644    US-A1- 2008 250 774**

**Description**

La présente invention concerne un procédé et un dispositif de réglage de la consommation d'agent de dépollution d'une ligne d'échappement du moteur thermique d'un véhicule hybride, ceci selon les différents modes de propulsion ayant déjà été mis en oeuvre pour le roulage du véhicule hybride.

Plus particulièrement, la présente invention se rapporte au contrôle de la consommation d'agent de dépollution pour un véhicule hybride quelque soit l'architecture de la motorisation dudit véhicule et le type de moteur thermique équipant le véhicule, par exemple un moteur Diesel ou un moteur essence, ceci quelque soit le type de carburant utilisé, le mode d'introduction du carburant ou l'alimentation en air.

Dans ce qui va suivre, il sera pris comme exemple de procédé de dépollution une réduction catalytique sélective, autrement appelée SCR, ce procédé de réduction fonctionnant par injection dans la ligne d'échappement d'un agent de dépollution dit réducteur SCR. Ceci n'est cependant pas limitatif et la présente invention s'applique pour tout procédé de dépollution de la ligne d'échappement d'un véhicule hybride requérant l'injection d'une quantité d'agent de dépollution lors du fonctionnement du moteur thermique dudit véhicule.

Dans le cas d'une réduction catalytique sélective, le véhicule hybride dispose d'un superviseur de contrôle moteur et d'un système de post-traitement des oxydes d'azote NOx par injection d'un réactif à l'échappement selon un système de réduction catalytique sélective. Les niveaux de polluants émis par les véhicules sont en effet soumis à réglementation. Parmi ces polluants, les oxydes d'azote NOx sont plus particulièrement réglementés avec des normes d'émission de plus en plus contraignantes.

Afin de diminuer le niveau d'émission d'oxydes d'azote, ces derniers peuvent être traités en sortie du moteur via des systèmes de post-traitement. Ainsi, le système de post-traitement des gaz d'échappement du moteur peut comprendre une réduction catalytique sélective utilisant un agent réducteur, avantageusement de l'urée.

Cet agent réducteur est présent dans un réservoir spécifique prévu dans le véhicule automobile. Le volume du réservoir d'agent réducteur SCR est dimensionné pour tenir une distance cible à parcourir par le véhicule prédéfinie et doit être à nouveau rempli après ladite distance cible parcourue.

Cette distance cible parcourue est calculée pour un conducteur à profil de conduite dit moyen utilisant une consommation moyenne de réducteur. Un tel conducteur n'est cependant pas représentatif de tous les types de conducteurs existants. En effet, certains conducteurs auront vidé le réservoir d'agent réducteur SCR avant de couvrir la distance cible tandis que d'autres conducteurs n'auront pas consommé tout le volume d'agent réducteur SCR sur ladite distance cible.

Cela s'applique plus particulièrement pour un véhicule hybride. En effet, dans ce type de véhicule, le conducteur peut choisir d'utiliser un mode de propulsion thermique consommant du réducteur SCR ou un mode de propulsion autre que thermique, le plus fréquemment un mode électrique, n'en consommant pas. Il est évident que la distance cible parcourue pour un remplissage du réservoir n'est plus pertinente pour un véhicule hybride étant donné que, pour une même distance parcourue, le réservoir d'agent réducteur SCR sera plus ou moins plein selon que le conducteur aura opté pour un mode de propulsion autre que thermique ou pour un mode de propulsion thermique.

En effet, en mode de propulsion autre que thermique et sans allumage du moteur thermique, aucune quantité d'agent réducteur SCR n'est injectée dans la ligne d'échappement. Plus le conducteur d'un véhicule hybride roule en mode autre que thermique et moins est consommé d'agent réducteur SCR. Un véhicule hybride ayant un fort taux de roulage autre que thermique ne consomme donc pas toute la quantité d'agent réducteur SCR embarquée dans le véhicule.

Les véhicules hybrides ont la réputation d'être propres et il convient donc que la dépollution de l'échappement de leur moteur thermique se fasse avec la meilleure efficacité possible pour renforcer encore leur image de marque. De plus, un véhicule hybride, avec des possibilités d'alternance de fonctionnement du moteur thermique et du moteur électrique, offre des possibilités pouvant être avantageusement exploitées dans le cadre de la dépollution de son échappement par un réducteur SCR.

Le document FR-A-2 929 644 décrit un procédé de contrôle de la consommation d'agent réducteur dans un véhicule automobile comprenant les étapes de détermination d'une consigne de masse d'agent réducteur souhaitée dans le catalyseur, de détermination d'une quantité d'agent consommée depuis le dernier remplissage du réservoir et de détermination d'un écart entre cette quantité consommée et une consommation théorique. En fonction de cet écart, il est procédé à la modification de la consigne et à la détermination, en fonction de la consigne modifiée et d'une quantité d'agent présente dans le catalyseur, d'une quantité d'agent réducteur à injecter.

Ce document ne décrit ni ne suggère un procédé de réglage de la consommation d'agent de dépollution dans un véhicule hybride pour optimiser la dépollution dudit véhicule. Au contraire, dans ce document, il est consenti à diminuer l'efficacité du système de dépollution dans le but de garantir une alimentation correcte du système entre deux remplissages d'agent de dépollution.

On connait encore du document US2008250774A1 un procédé de contrôle de la consommation d'agent réducteur dans un véhicule automobile conforme au préambule de la revendication 1.

Le problème à la base de la présente invention est, pour un véhicule hybride, de modifier la consommation d'agent de dépollution injecté dans la ligne d'échappement dudit véhicule selon le ou les modes de propulsion déjà mis en oeuvre sur ledit véhicule, afin d'utiliser un éventuel surplus de capacité d'agent de dépollution pour augmenter la dépollution de la ligne d'échappement.

Pour atteindre cet objectif, il est prévu selon l'invention un procédé de réglage de la consommation d'un agent de dépollution, injecté depuis un réservoir dans la ligne d'échappement du moteur thermique d'un véhicule hybride, le réservoir présentant une contenance en agent de dépollution suffisante pour le parcours par le véhicule d'une distance prédéterminée entre deux remplissages dudit réservoir, lequel procédé comprend l'étape d'injection d'une quantité d'agent de dépollution dans la ligne d'échappement calculée en fonction d'une consommation moyenne initialement estimée pour la distance restant à parcourir permettant au véhicule de couvrir ladite distance prédéterminée, caractérisé en ce que, pour une distance déjà parcourue, il est calculé une quantité cumulée effectivement consommée d'agent et si cette quantité cumulée effectivement consommée est inférieure à la quantité d'agent cumulée basée sur la consommation moyenne estimée, la quantité d'agent de dépollution injectée dans la ligne d'échappement est augmentée.

L'effet technique réside dans la possibilité offerte à un véhicule hybride à fort taux de roulage autre que thermique, donc ayant un surplus d'agent dépolluant par rapport à un véhicule roulant en mode de propulsion thermique, de consommer ensuite efficacement le surplus d'agent de dépollution embarqué, par exemple du réducteur SCR. Ceci permet au véhicule hybride d'émettre encore moins de pollution, par exemple d'oxydes d'azote, quand le moteur thermique est ensuite allumé et donc d'augmenter le caractère propre dudit véhicule.

De plus, la présente invention concourt à résorber un désavantage des véhicules hybrides par rapport aux véhicules thermiques concernant leur dépollution, notamment lors d'une réduction catalytique sélective. Du fait des démarrages et arrêts alternés du moteur thermique dans un véhicule hybride, la dépollution peut s'avérer moins efficiente pour un véhicule hybride que pour un véhicule thermique, étant donné la durée de la nécessaire montée en température de la ligne d'échappement lors d'un démarrage du véhicule pour que le système de dépollution soit le plus efficace possible. Avec l'utilisation du surplus d'agent de dépollution obtenue conformément à la présente invention, ce désavantage est surmonté.

Enfin, du fait de l'encombrement dans un véhicule hybride, le réservoir d'agent de dépollution tend à être d'un volume moindre que celui d'un véhicule thermique, d'où une tendance à injecter moins d'agent pour un véhicule hybride que pour un véhicule thermique. Ceci est annihilé par la présente invention qui utilise un surplus d'agent de dépollution amassé lors d'une propulsion autre que thermique du véhicule hybride, notamment une propulsion électrique, pour renforcer la dépollution lors de la propulsion thermique dudit véhicule hybride.
Le procédé selon l'invention pourra en outre présenter au moins facultativement l'une quelconque des caractéristiques suivantes :

- l'augmentation de la quantité d'agent de dépollution à injecter s'effectue tant que la quantité d'agent à injecter extrapolée pour la distance restant à parcourir jusqu'au prochain remplissage n'est pas supérieure à la quantité d'agent restant dans le réservoir,

- la consommation moyenne initialement estimée pour la distance restant à parcourir est remplacée par une consommation moyenne réactualisée pour la distance restant à parcourir quand la consommation moyenne réactualisée est supérieure à la consommation moyenne initialement estimée, la consommation moyenne réactualisée pour la distance restant à parcourir étant déterminée selon l'équation:

$$Cmr = (V - Qcr)/(Dc - Ddp)$$

V étant la contenance du réservoir,

Qcr étant la quantité d'agent cumulée effectivement consommée,

Dc étant la distance prédéterminée entre deux remplissages dudit réservoir,

Ddp étant la distance déjà parcourue,

- si la quantité d'agent cumulée effectivement consommée est inférieure à la quantité d'agent cumulée basée sur la consommation moyenne initialement estimée pour la distance restant à parcourir, la quantité d'agent de dépollution injectée dans la ligne d'échappement est recalculée en fonction de la consommation moyenne réactualisée pour la distance restant à parcourir, ladite consommation moyenne réactualisée remplaçant la consommation moyenne initialement estimée pour la distance restant à parcourir,

- après chaque mode de propulsion du véhicule hybride, il est procédé au calcul de la quantité cumulée effectivement consommée d'agent et au calcul de la distance restant à parcourir avant le prochain remplissage du réservoir, le calcul de la quantité cumulée effectivement consommée se faisant par ajout à la précédente quantité cumulée effectivement consommée d'agent de la quantité d'agent consommée lors dudit mode,

- il est procédé au calcul de la quantité cumulée effectivement consommée d'agent et au calcul de la distance restant à parcourir avant le prochain remplissage du réservoir à intervalle de temps régulier ou à intervalle de distance parcourue régulier,

- le calcul de la quantité cumulée effectivement consommée d'agent est corrigé en fonction d'une mesure de niveau de remplissage du réservoir,

- la dépollution s'effectue par un procédé de réduction catalytique sélective SCR, l'agent de dépollution étant un agent réducteur SCR,

L'invention concerne aussi un dispositif de réglage de la consommation d'un agent de dépollution pour la mise en oeuvre d'un tel procédé, l'agent de dépollution faisant partie d'un système de dépollution et étant injecté depuis un réservoir dans la ligne d'échappement du moteur thermique d'un véhicule hybride, le système de dépollution comprenant un superviseur global réglant la quantité d'agent injectée en fonction d'une consommation moyenne initialement estimée pour la distance restant à parcourir, ledit dispositif étant caractérisé en ce qu'il comprend des moyens de calcul d'une consommation moyenne réactualisée pour la distance restant à parcourir, des moyens de comparaison de ladite consommation moyenne réactualisée avec ladite consommation moyenne initialement estimée et, si ladite consommation moyenne réactualisée est supérieure à la consommation moyenne initialement estimée, des moyens d'imposition au superviseur global du remplacement de ladite consommation moyenne initialement estimée par ladite consommation réactualisée.

L'invention concerne enfin un véhicule hybride, comprenant un moteur thermique associé à au moins un moteur autre que thermique ainsi qu'un système de dépollution par injection depuis un réservoir d'un agent de dépollution dans la ligne d'échappement du moteur thermique, caractérisé en ce qu'il est conçu pour la mise en oeuvre d'un tel procédé ou en ce qu'il comprend un tel dispositif.

D'autres caractéristiques, buts et avantages de la présente invention apparaîtront à la lecture de la description détaillée qui va suivre et au regard des dessins annexés donnés à titre d'exemples non limitatifs et sur lesquels :

- la figure 1 est une représentation schématique d'une courbe de vitesse du véhicule hybride et d'une courbe d'alternance de modes de propulsion électrique ou thermique en fonction de la distance parcourue,

- la figure 2 est une représentation schématique d'une courbe de consommation du réducteur SCR en fonction de la distance parcourue pour ledit véhicule hybride,

- la figure 3 est une représentation schématique de deux courbes de consommation cumulée du réducteur SCR en fonction de la distance parcourue par ledit véhicule hybride, la courbe inférieure représentant la courbe cumulée initiale de réducteur de SCR et la courbe supérieure représentant la courbe cumulée réactualisée de réducteur de SCR, cette courbe étant obtenue conformément au procédé selon l'invention,

- la figure 4 est une représentation schématique des étapes du procédé de réglage de la consommation d'agent réducteur SCR selon les différents modes de propulsion déjà mis en oeuvre pour le véhicule hybride, ce procédé étant conforme à la présente invention.

Dans ce qui va suivre, le véhicule hybride est un véhicule avec un moteur thermique et au moins un moteur électrique. Il est à garder à l'esprit que le procédé de la présente invention peut aussi s'appliquer à un véhicule hybride ayant un moteur non thermique autre qu'électrique, par exemple une pile à combustible. Pour simplification, il sera fait référence à un moteur électrique dans la présente description pour illustrer le moteur non thermique.

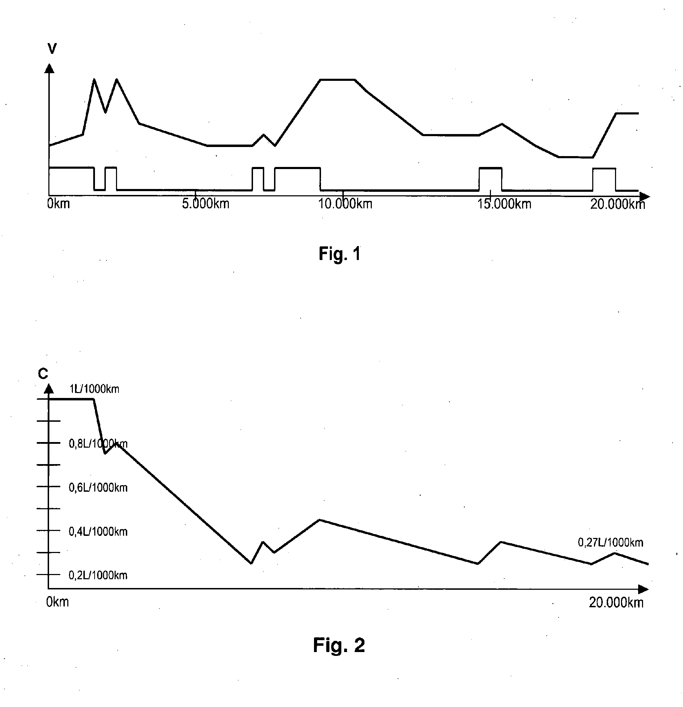

Pour les figures 1 à 3, il est à noter que les distances parcourues ou distances de roulage correspondant à un mode de propulsion thermique ou électrique sont illustrées aux figures 1 à 3 en étant exagérément longues, ceci afin de ne pas compliquer inutilement les courbes montrées à ces figures. Dans la pratique, en conduite réelle, les temps de roulage sont plus nombreux et moins longs.

Il convient aussi de remarquer qu'à la figure 1 les modes de propulsion thermique et électrique sont toujours considérés comme étant alternés. Ceci n'est pas obligatoire et en pratique un mode thermique peut cohabiter avec un mode électrique en propulsion, notamment quand une augmentation de couple est nécessaire pour la propulsion du véhicule hybride.

Comme précédemment mentionné, le procédé de réglage de la consommation d'un agent de dépollution, conformément à la présente invention, est utilisé pour une réduction catalytique sélective avec injection d'un agent de dépollution dit réducteur SCR. Ceci n'est cependant pas limitatif.

Pour faciliter la compréhension de l'invention, il est pris pour illustration un volume de réservoir SCR de 20L et une distance cible à couvrir sans devoir faire l'appoint de 20.000km. Selon la pratique généralisée d'évaluation de la consommation moyenne d'agent réducteur SCR, il est considéré que la consommation estimée d'agent réducteur SCR est égale à 1 L/1.000km.

La figure 1 montre une courbe de vitesse V d'un véhicule hybride et une courbe d'alternance de mode de propulsion électrique ou thermique dudit véhicule, les deux courbes étant en fonction de la distance parcourue. Le véhicule hybride présente un système de réduction catalytique sélective avec un réservoir de réducteur SCR. Durant un mode de propulsion thermique, il est consommé du réducteur SCR tandis que, durant un mode de propulsion électrique, il n'est pas consommé d'agent réducteur SCR.

A la figure 1, il est montré des modes de propulsion thermique formant la crête de la courbe d'alternance des modes de propulsion tandis que les modes de propulsion électrique, alternés avec les modes de propulsion thermique, forment la base de ladite courbe. A la figure 1, il y a six modes de propulsion thermique alternés avec six modes de propulsion électrique, ces modes étant de différents kilométrages, ce qui n'est pas limitatif.

Le véhicule hybride comprend, pour la gestion de l'alternance des modes thermique et électrique, un superviseur hybride. Lors d'un roulage, le superviseur hybride, hébergé dans le calculateur du véhicule décide si la traction doit être effectuée par le moteur thermique ou par le moteur électrique ou éventuellement par les deux moteurs. Ceci est fonction de conditions multiples comprenant notamment la charge de la batterie, la position de la pédale d'accélérateur, la température extérieure, le lestage du moteur, les conditions de conduite du véhicule etc..

Selon les habitudes du conducteur, par exemple un roulage urbain ou sur autoroute, une conduite sportive ou non, la fréquence de recharge du véhicule, le taux de roulage électrique sera très varié et certains véhicules consommeront bien moins que 1L/1.000km d'agent réducteur SCR. Ceci vaut particulièrement quand les roulages électriques sont fréquents et prolongés.

Comme il n'est pas possible de prévoir le taux de roulage électrique du conducteur sur une distance de 20.000km, la cible de consommation d'agent réducteur SCR sera toujours de 1L/1.000km quand le moteur thermique est allumé.

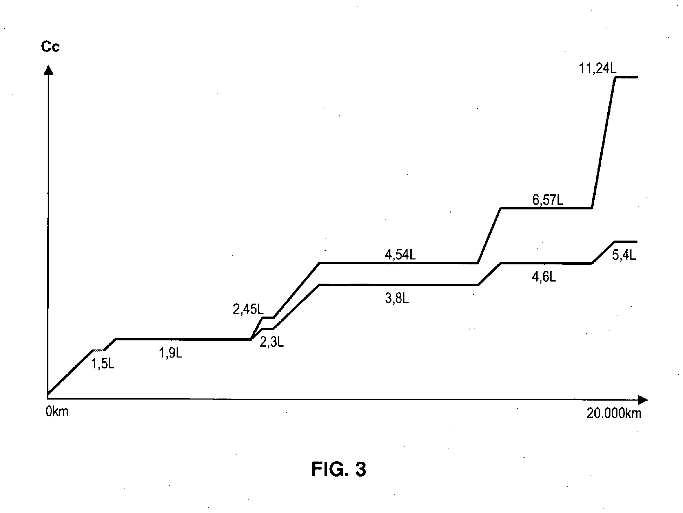

Comme la consommation estimée de réducteur est de 1L/1.000km, ceci dès que le moteur thermique est allumé, un conducteur dont le taux de roulage électrique est de 0% vide le réservoir de 20L sur les 20.000km. Ce n'est pas le cas à la figure 1 qui, de même que les figures 2 et 3 qui lui sont liées, montre une consommation d'agent réducteur SCR globale pour un conducteur avec un fort taux de roulage électrique, environ de 73%, sur la distance de 20.000km.

Comme la consommation initialement estimée pour la distance restant à parcourir d'agent réducteur SCR a été choisie pour que tous les véhicules tiennent la distance cible sans vider le réservoir de réducteur, des véhicules à fort taux de roulage électrique ne consommeront donc pas la totalité du volume d'agent réducteur SCR embarqué.

Les figures 2 et 3 montrent respectivement la consommation C et deux consommations cumulées Cc d'agent réducteur SCR pour un véhicule hybride respectant l'alternance des modes de propulsion illustrée à la figure 1, ceci en fonction du kilométrage parcouru pendant ces modes. A la figure 3, la courbe de consommation cumulée supérieure est obtenue conformément au procédé selon l'invention.

Pour un véhicule hybride avec un taux de roulage électrique de 73%, ce qui correspond à 5.400km parcourus le moteur thermique allumé, le véhicule n'aura consommé que 5,4L d'agent réducteur SCR pour un réservoir de 20L, comme il est montré à la figure 3. Sa consommation aura été de 0.27L/1.000km comme il est montré à la figure 2.

A chaque roulage avec moteur thermique allumé, il est consommé 1L/1.000km d'agent réducteur SCR. Ainsi, lorsque l'on calcule en permanence la consommation en réducteur SCR ramenée à la distance véhicule parcourue, distance qui additionne les roulages, la consommation en réducteur SCR dudit véhicule hybride est toujours inférieure à 1L/1.000km.

Un tel véhicule hybride aurait ainsi pu consommer davantage d'agent réducteur SCR en roulage thermique et, par conséquent, rejeter encore moins d'oxyde d'azote en assurant une dépollution plus efficace.

De manière connue, un système réduction catalytique sélective présente un superviseur global du système SCR, ce superviseur pouvant être intégré dans le diagnostic embarqué ou OBD du véhicule hybride gérant les émissions polluantes du véhicule. Le dispositif d'adaptation de la consommation de réducteur pour la mise en oeuvre du procédé selon l'invention peut être intégré dans le superviseur global du système SCR.

L'objectif du procédé selon la présente invention est de faire en sorte que tous les véhicules hybrides, quels que soient leurs taux de roulage électrique, consomment tout le volume d'agent réducteur SCR embarqué, de sorte à rejeter le minimum d'oxyde d'azote et de contribuer ainsi à une dépollution plus efficace du véhicule hybride.

Le procédé de réglage de la consommation d'agent réducteur SCR, selon la présente invention, comprend, au moins à chaque fin de roulage électrique ou thermique, le calcul de la consommation cumulée d'agent réducteur SCR sur tout le fonctionnement du véhicule à partir du remplissage du réservoir d'agent réducteur SCR. Cette consommation cumulée Cc est calculée par intégration du débit d'agent réducteur SCR injecté. Cela est effectué, à chaque fin de roulage, avec une sauvegarde de la valeur de consommation calculée Cc dans des moyens de calcul qui peuvent être présents dans le superviseur global du système SCR.

A partir de cette consommation globale, est calculé le volume d'agent réducteur SCR restant pour parcourir le reste de la distance cible, aux figures 1 à 3 égale à 20.000km. Une consommation moyenne réactualisée pour la distance restant à parcourir et notamment pour le prochain roulage est alors déduite du volume d'agent réducteur SCR restant, divisé par le reste de la distance restant à parcourir à condition que ladite consommation ne soit pas inférieure à la consommation moyenne initialement estimée pour la distance à parcourir.

Dans ce qui va suivre, les distances parcourues lors des roulages en différents modes sont mieux vues à la figure 1, tandis que les figures 2 et 3 illustrent respectivement les consommations simples et cumulées lors de ces roulages. A la figure 3, à la fin de chaque mode thermique, le chiffre figurant près de chaque courbe est la consommation cumulée d'agent dépolluant effectivement consommée. Dans ce qui va suivre, ce sont les données relatives au procédé de réglage selon la présente invention, donc correspondant à la courbe supérieure montrée à la figure 3 qui vont être détaillées.

Sur le premier roulage de 1.500km, la consommation cible est de 1L/1.000km pour tenir 20.000km avec 20L de réducteur. Le véhicule a donc consommé 1,5L. Il reste 18,5L de réducteur dans le réservoir et 18.500km à parcourir. La consommation de quantité moyenne sur les 18.500 prochains kilomètres sera de 18,5/18.500 soit 1L/1.000km.

Le prochain roulage de 400km est en électrique, sans consommation d'agent réducteur SCR. Il reste 18,5L et 18.100km à parcourir, soit une consommation moyenne sur les 18.100km restants de 18,5/18.100 soit 1.02L/1.000km donc supérieure à la consommation moyenne initiale de 1L/1.000km.

Le prochain roulage de 400km est en thermique, à 1,02L/1.000km. 0,41 L d'agent réducteur SCR est consommé, il reste donc 18,09L pour 17.700km, soit une cible réactualisée de 1.02L/1.000km pour les prochains 17.700km.

Le roulage suivant est de 4.300km en électrique, il reste ainsi 18,09L pour 13.400km restants, soit une cible réactualisée de 1.35L/1.000km pour les 13.400km restants.

Le roulage suivant est de 400km en thermique, la consommation est ainsi de 1.35L/1.000km soit 0,54L de réducteur sur le parcours. Il reste ainsi 17,55L pour 13.000km restants, soit une cible réactualisée de 1,35L/1.000km.

Le roulage suivant est de 400km en électrique, il reste ainsi 17,55L pour 12.600km restants, soit une cible réactualisée de 1.39L/1.000km pour les 12.600km restants.

Le roulage suivant est de 1.500km en thermique, la consommation est ainsi de 1,39L/1.000km soit 2,09L de réducteur sur le parcours. Il reste ainsi 15,46L pour 11.100km restants, soit une cible réactualisée de 1.39L/1.000km.

Le roulage suivant est de 5.000km en électrique, il reste ainsi 15,46L pour 6.100km restants, soit une cible réactualisée de 2,53L/1.000km pour les 6.100km restants.

Le roulage suivant est de 800km en thermique, la consommation est ainsi de 2.53L/1.000km soit 2,03L de réducteur sur le parcours. Il reste ainsi 13,43L pour 5.300km restants, soit une cible réactualisée de 2,53L/1.000km.

Le roulage suivant est de 3.000km en électrique. Il reste ainsi 13,43L pour 2.300km restants, soit une cible réactualisée de 5.84L/1.000km pour les 2.300km restants.

Le roulage suivant est de 800km en thermique, la consommation est ainsi de 5.84L/1.000km soit 4,67L de réducteur sur le parcours. Il reste ainsi 8,76L pour 150km restants, soit une cible réactualisée de 5.84L/1.000km.

Le dernier roulage avant d'atteindre 20.000km est de 1.500km en électrique. Comme montré à la figure 3, le véhicule aura ainsi consommé 11,24L de réducteur conformément au procédé selon la présente invention au lieu de 5,4L sans réactualisation de la consommation. Une dépollution efficace sera ainsi assurée, avec deux fois plus de NOx détruits, du fait de l'utilisation du procédé selon l'invention, ce qui accroît notoirement l'efficacité du système SCR.

L'invention permet de profiter au mieux du potentiel de destruction des NOx offert par la quantité d'agent réducteur SCR embarquée dans le réservoir, uniquement par une meilleure gestion de cette quantité et sans modification du système SCR.

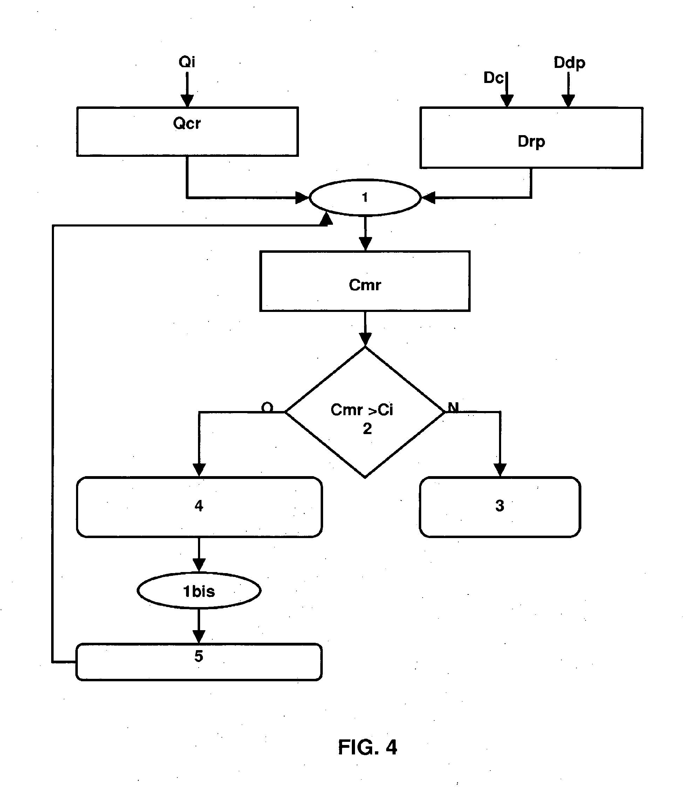

La figure 4 montre une récapitulation des étapes du procédé de réglage de la consommation d'agent réducteur SCR selon les différents modes de propulsion déjà mis en oeuvre pour un véhicule hybride, ce procédé étant conforme à la présente invention.

Le dispositif de réglage de la consommation d'un agent de dépollution pour la mise en oeuvre du procédé comprend des moyens de calcul opérant de manière suivante.

D'une part, il est procédé à l'étape de calcul de la quantité cumulée d'agent réducteur SCR depuis 0km, cette quantité étant référencée Qcr à la figure 4. Le calcul de la quantité cumulée Qcr d'agent réducteur SCR est effectué à partir de la quantité injectée Qi d'agent réducteur SCR.

D'autre part, il est procédé à l'étape de calcul de la distance restant à parcourir Drp pour atteindre la distance prédéterminée entre deux remplissages. Le calcul de ladite distance restant à parcourir Drp est fait à partir, d'une part, de la distance prédéterminée Dc entre deux remplissages dudit réservoir, donc distance sans appoint d'agent réducteur SCR et, d'autre part, de la distance déjà parcourue Ddp par le véhicule depuis son départ, c'est-à-dire le kilomètre zéro.

Il est procédé en 1 à la suspension de la régulation d'injection de réducteur avec une quantité injectée dans la ligne d'échappement calculée qui tenait compte de la consommation moyenne initialement estimée pour la distance restant à parcourir. Ceci se fait par un superviseur global du système SCR réglant la quantité d'agent injectée en fonction d'une consommation moyenne initialement estimée pour la distance restant à parcourir.

Ensuite, les deux valeurs obtenues respectivement par le calcul de la quantité cumulée Qcr et le calcul de la distance restant à parcourir Drp permettent le calcul de la consommation moyenne réactualisée Cmr d'agent réducteur SCR pour la distance restant à parcourir et notamment le prochain roulage.

,Cette consommation moyenne réactualisée Cmr pour la distance restant à parcourir est déterminée selon l'équation:

$$Cmr= (V - Qcr)/ (Dc - Ddp)$$

pour laquelle équation, V est la contenance du réservoir, Qcr est la quantité cumulée effectivement consommée d'agent, Dc la distance prédéterminée entre deux remplissages dudit réservoir et Ddp la distance déjà parcourue.

La valeur de la consommation moyenne réactualisée Cmr pour la distance restant à parcourir d'agent réducteur SCR est alors transmise à des moyens de comparaison sous la forme d'un comparateur 2 présent dans le dispositif de réglage selon la présente invention afin d'être comparée à la consommation moyenne initialement estimée Ci pour la distance restant à parcourir.

Si la valeur de la consommation moyenne réactualisée Cmr pour la distance restant à parcourir est inférieure à la consommation moyenne initialement estimée Ci pour la distance restant à parcourir, ce qui est symbolisé par la sortie N du comparateur 2, il est procédé en 3 au maintien de la consommation moyenne initialement estimée Ci de réducteur par le superviseur global du système SCR pour la distance restant à parcourir.

Si la valeur de la consommation moyenne réactualisée Cmr d'agent réducteur pour la distance restant à parcourir est supérieure à la consommation moyenne initialement estimée Ci pour la distance restant à parcourir, ce qui est symbolisé par la sortie O du comparateur 2, il est procédé en 4 à la mise à jour de la cible de régulation de consommation de réducteur pour le prochain roulage par adoption de consommation moyenne réactualisée Cmr pour la prochaine période de roulage de la distance restant à parcourir.

Ensuite, il est procédé en 1 bis à la levée de la suspension de la régulation d'injection de réducteur pour le superviseur global puis en 5 à la régulation de l'injection de réducteur de SCR par ledit superviseur avec une nouvelle cible consommation égale à la consommation moyenne réactualisée Cmr pour la distance restant à parcourir.

De multiples variations du procédé de réglage sont possibles. Par exemple, s'il est préféré de procéder au calcul de la quantité cumulée effectivement consommée Qcr d'agent pour la distance restant à parcourir et au calcul de la distance restant à parcourir Drp avant le prochain remplissage du réservoir après chaque mode de propulsion du véhicule hybride, ce calcul peut aussi être fait, en association avec le calcul pour chaque mode ou en alternative à celui-ci, à intervalle de temps régulier ou à intervalle de distance parcourue régulier.

D'autre part, le calcul de la quantité cumulée effectivement consommée Qcr d'agent pour la distance à parcourir peut être corrigé en fonction d'une mesure de niveau de remplissage du réservoir à fin de vérification de ladite quantité cumulée Qcr.

La présente invention comprend aussi un dispositif de réglage de la consommation d'un agent de dépollution pour la mise en oeuvre du procédé ci-dessus décrit, le dispositif étant en relation avec le superviseur global du système de dépollution précédemment mentionné. Pour l'estimation des quantités futures d'agent injectées dans la ligne d'échappement, le dispositif comprend, en plus des moyens de calcul et de comparaison précédemment mentionnés, des moyens d'imposition au superviseur global du remplacement de la consommation moyenne initialement estimée Ci, par la consommation réactualisée Cmr pour la distance restant à parcourir, ceci quand la consommation réactualisée Cmr pour la distance restant à parcourir est supérieure à la consommation moyenne initialement estimée Ci pour la distance restant à parcourir.

**Revendications**

1. Procédé de réglage de la consommation d'un agent de dépollution, injecté depuis un réservoir dans la ligne d'échappement du moteur thermique d'un véhicule hybride, le réservoir présentant une contenance en agent de dépollution suffisante pour le parcours par le véhicule d'une distance prédéterminée (Dc) entre deux remplissages dudit réservoir, lequel procédé comprend l'étape d'injection d'une quantité d'agent de dépollution dans la ligne d'échappement calculée en fonction d'une consommation moyenne initialement estimée (Ci) pour la distance restant à parcourir permettant au véhicule de couvrir ladite distance prédéterminée (Dc), **caractérisé en ce que**, pour une distance déjà parcourue (Ddp), il est calculé une quantité cumulée effectivement consommée (Qcr) d'agent et si cette quantité cumulée effectivement consommée (Qcr) est inférieure à la quantité d'agent cumulée basée sur la consommation moyenne estimée (Ci) pour la distance restant à parcourir, la quantité d'agent de dépollution injectée dans la ligne d'échappement est augmentée.

2. Procédé selon la revendication précédente, pour lequel ladite augmentation de la quantité d'agent de dépollution à injecter s'effectue tant que la quantité d'agent à injecter extrapolée pour la distance restant à parcourir (Drp) jusqu'au prochain remplissage n'est pas supérieure à la quantité d'agent restant dans le réservoir.

3. Procédé selon l'une quelconque des revendications précédentes, dans lequel la consommation moyenne initialement estimée (Ci) pour la distance restant à parcourir est remplacée par une consommation moyenne réactualisée (Cmr) pour la distance restant à parcourir quand ladite consommation moyenne réactualisée (Cmr) est supérieure à ladite consommation moyenne initialement estimée (Ci), la consommation moyenne réactualisée (Cmr) pour la distance restant à parcourir étant déterminée selon l'équation:

$$Cmr= (V - Qcr)/ (Dc - Ddp)$$

V étant la contenance du réservoir,
Qcr étant la quantité d'agent cumulée effectivement consommée,
Dc étant la distance prédéterminée entre deux remplissages dudit réservoir,
Ddp étant la distance déjà parcourue.

4. Procédé selon la revendication précédente, pour lequel, si la quantité d'agent cumulée effectivement consommée (Qcr) est inférieure à la quantité d'agent cumulée basée sur la consommation moyenne initialement estimée (Ci) pour la distance restant à parcourir, la quantité d'agent de dépollution injectée dans la ligne d'échappement est recalculée en fonction de la consommation moyenne réactualisée (Cmr) pour la distance restant à parcourir, ladite consommation moyenne réactualisée (Cmr) remplaçant ladite consommation moyenne initialement estimée (Ci).

5. Procédé selon l'une quelconque des deux revendications précédentes, pour lequel, après chaque mode de propulsion du véhicule hybride, il est procédé au calcul de la quantité cumulée effectivement consommée (Qcr) d'agent et au calcul de la distance restant à parcourir (Drp) avant le prochain remplissage du réservoir, le calcul de la quantité cumulée effectivement consommée (Qcr) se faisant par ajout à la précédente quantité cumulée effectivement consommée d'agent de la quantité consommée lors dudit mode.

6. Procédé selon l'une quelconque des trois revendications précédentes, pour lequel il est procédé au calcul de la quantité cumulée effectivement consommée (Qcr) d'agent et au calcul de la distance restant à parcourir (Drp) avant le prochain remplissage du réservoir à intervalle de temps régulier ou à intervalle de distance parcourue régulier.

7. Procédé selon l'une quelconque des deux revendications précédentes, pour lequel le calcul de la quantité cumulée effectivement consommée (Qcr) d'agent est corrigé en fonction d'une mesure de niveau de remplissage du réservoir.

8. Procédé selon l'une quelconque des revendications précédentes, pour lequel la dépollution s'effectue par un procédé de réduction catalytique sélective SCR, l'agent de dépollution étant un agent réducteur SCR.

9. Dispositif de réglage de la consommation d'un agent de dépollution pour la mise en oeuvre du procédé selon l'une quelconque des revendications précédentes, l'agent de dépollution faisant partie d'un système de dépollution et étant injecté depuis un réservoir dans la ligne d'échappement du moteur thermique d'un véhicule hybride, le système de dépollution comprenant un superviseur global réglant la quantité d'agent injectée en fonction d'une consommation moyenne initialement estimée (Ci) pour la distance restant à parcourir, ledit dispositif étant **caractérisé en ce qu'**il comprend des moyens de calcul d'une consommation moyenne réactualisée (Cmr) pour la distance restant à parcourir, des moyens de comparaison de ladite consommation moyenne réactualisée (Cmr) avec ladite consommation moyenne initialement estimée (Ci) et, si ladite consommation moyenne réactualisée (Cmr) est supérieure à ladite consommation moyenne initialement estimée (Ci), des moyens d'imposition au superviseur global du remplacement de ladite consommation moyenne initialement estimée (Ci) par ladite consommation moyenne réactualisée (Cmr).

10. Véhicule hybride, comprenant un moteur thermique associé à au moins un moteur autre que thermique ainsi qu'un système de dépollution par injection depuis un réservoir d'un agent de dépollution dans la ligne d'échappement du moteur thermique, **caractérisé en ce qu'**il est conçu pour la mise en oeuvre du procédé selon l'une quelconque des revendications 1 à 8 ou **en ce qu'**il comprend un dispositif selon la revendication précédente.

**Patentansprüche**

1. Verfahren zur Einstellung des Verbrauchs eines Verschmutzungsentfernungsmittels, das ausgehend von einem Tank in den Auspuffstrang des Verbrennungsmotors eines Hybridfahrzeugs eingespritzt wird, wobei der Tank einen Inhalt an Verschmutzungsentfernungsmittel aufweist, der ausreicht, damit das Fahrzeug eine vorbestimmte Entfernung (Dc) zwischen zwei Füllungen des Tanks zurücklegt, wobei das Verfahren den Einspritzschritt einer Menge an Verschmutzungsentfernungsmittel in den Auspuffstrang, die in Abhängigkeit von einem ursprünglich geschätzten mittleren Verbrauch (Ci) für die verbleibende zurückzulegende Entfernung berechnet ist, die es dem Fahrzeug erlaubt, die vorbestimmte Entfernung (Dc) zu decken, umfasst, **dadurch ge-**

**kennzeichnet, dass** für eine bereits zurückgelegte Entfernung (Ddp) eine summierte effektiv verbrauchte Menge (Qcr) an Mittel berechnet wird, und, falls diese summierte effektiv verbrauchte Menge (Qcr) kleiner ist als die auf dem geschätzten mittleren Verbrauch (Ci) für die verbleibende zurückzulegende Entfernung summierte Mittelmenge, die Menge an Verschmutzungsentfernungsmittel, die in den Auspuffstrang eingespritzt wird, erhöht wird.

2. Verfahren nach dem vorhergehenden Anspruch, wobei die Erhöhung der einzuspritzenden Verschmutzungsentfernungsmittelmenge so lange erfolgt, wie die für die verbleibende zurückzulegende Entfernung (Drp) bis zum nächsten Füllen extrapolierte Menge nicht größer ist als die in dem Tank verbleibende Mittelmenge.

3. Verfahren nach einem der vorhergehenden Ansprüche, wobei der ursprünglich geschätzte mittlere Verbrauch (Ci) für die verbleibende zurückzulegende Entfernung durch einen aktualisierten mittleren Verbrauch (Cmr) für die verbleibende zurückzulegende Entfernung ersetzt wird, wenn der aktualisierte mittlere Verbrauch (Cmr) größer ist als der ursprünglich geschätzte mittlere Verbrauch (Ci), wobei der aktualisierte mittlere Verbrauch (Cmr) für die verbleibende zurückzulegende Entfernung gemäß der folgenden Gleichung bestimmt wird:

$$Cmr = (V-Qcr)/(DC-Ddp)$$

wobei V der Inhalt des Tanks ist,
Qcr die effektiv verbrauchte summierte Mittelmenge ist,
Dc die vorbestimmte Entfernung zwischen zwei Füllungen des Tanks ist,
Ddp die bereits zurückgelegte Entfernung ist.

4. Verfahren nach dem vorhergehenden Anspruch, wobei, falls die effektiv verbrauchte summierte mittlere Menge (Qcr) kleiner ist als die auf dem ursprünglich geschätzten mittleren Verbrauch (Ci) für die verbleibende zurückzulegende Entfernung basierend summierte Menge, die in den Auspuffstrang eingespritzte Verschmutzungsentfernungsmittelmenge in Abhängigkeit von dem aktualisierten mittleren Verbrauch (Cmr) für die verbleibende zurückzulegende Entfernung neu berechnet wird, wobei der aktualisierte mittlere Verbrauch (Cmr) den ursprünglich geschätzten mittleren Verbrauch (Ci) ersetzt.

5. Verfahren nach einem der zwei vorhergehenden Ansprüche, wobei, nach jedem Antriebsmodus des Hybridfahrzeugs die Berechnung der effektiv verbrauchten summierten Menge (Qcr) an Mittel und die Berechnung der verbleibenden zurückzulegenden Entfernung (Drp) vor dem nächsten Füllen des Tanks ausgeführt wird, wobei die Berechnung der effektiv verbrauchten summierten Menge (Qcr) durch Hinzufügen der bei dem Modus verbrauchten Menge zu der vorhergehenden effektiv verbrauchten summierten Menge an Mittel erfolgt.

6. Verfahren nach einem der drei vorhergehenden Ansprüche, bei dem die Berechnung der effektiv verbrauchten summierten Menge (Qcr) an Mittel und die Berechnung der verbleibenden zurückzulegenden Entfernung (Drp) vor dem nächsten Fühlen des Tanks in regelmäßigen Zeitintervallen oder in regelmäßigen zurückgelegten Entfernungsintervallen ausgeführt wird.

7. Verfahren nach einem der zwei vorhergehenden Ansprüche, bei dem die Berechnung der effektiv verbrauchten summierten Menge (Qcr) an Mittel in Abhängigkeit von einer Füllstandmessung des Tanks korrigiert wird.

8. Verfahren nach einem der vorhergehenden Ansprüche, bei dem die Verschmutzungsentfernung anhand eines selektiven katalytischen SCR-Reduktionsverfahrens erfolgt, wobei das Verschmutzungsentfernungsmittel ein SCR-Reduktionsmittel ist.

9. Vorrichtung zur Einstellung des Verbrauchs eines Verschmutzungsentfernungsmittels zur Umsetzung des Verfahrens nach einem der vorhergehenden Ansprüche, wobei das Verschmutzungsentfernungsmittel zu einem Verschmutzungsentfernungssystem gehört und ausgehend von einem Tank in den Auspuffstrang des Verbrennungsmotors eines Hybridfahrzeugs eingespritzt wird, wobei das Verschmutzungsentfernungssystem einen globalen Supervisor umfasst, der die eingespritzte Mittelmenge in Abhängigkeit von einem ursprünglich geschätzten mittleren Verbrauch (Ci) für die verbleibende zurückzulegende Entfernung einstellt, Vorrichtung **dadurch gekennzeichnet, dass** sie Mittel zum Berechnen eines aktualisierten mittleren Verbrauchs (Cmr) für die verbleibende zurückzulegende Entfernung, Mittel zum Vergleichen des aktualisierten mittleren Verbrauchs (Cmr) mit dem ursprünglich geschätzten mittleren Verbrauch (Ci) und, falls der aktualisierte mittlere Verbrauch (Cmr) größer ist als der ursprünglich geschätzte mittlere Verbrauch (Ci), Mittel, um dem globalen Supervisor das Ersetzen des ursprünglich geschätzten mittleren Verbrauchs (Ci) durch den aktualisierten mittleren Verbrauch (Cmr) aufzuerlegen umfasst.

10. Hybridfahrzeug, das einen Verbrennungsmotor umfasst, der mit mindestens einem anderen als einem Verbrennungsmotor sowie mit einem Verschmutzungsentfernungssystem durch Einspritzen ausgehend von einem Tank eines Verschmutzungsentfernungsmittels in den Auspuffstrang des Verbrennungsmotors assoziiert ist, **dadurch gekennzeichnet, dass** es zum Umsetzen des Verfahrens nach einem der Ansprüche 1 bis 8 konzipiert ist, oder dass es eine Vorrichtung nach dem vorhergehenden Anspruch umfasst.

**Claims**

1.  A method for adjusting the consumption of a pollution-removing agent injected from a reservoir into the exhaust line of the heat engine of a hybrid vehicle, the reservoir having a sufficient capacity of pollution-removing agent for the travel by the vehicle of a predetermined distance (Dc) between two fillings of said reservoir, which method includes the step of injection of a quantity of pollution-removing agent into the exhaust line calculated as a function of an initially estimated average consumption (Ci) for the remaining distance to be travelled, permitting the vehicle to cover said predetermined distance (Dc), **characterized in that**, for a distance (Ddp) already travelled, a total quantity (Qcr) of the agent actually consumed is calculated, and if said total quantity (Qcr) actually consumed is less than the total quantity of the agent based on the estimated average consumption (Ci) for the remaining distance to be travelled, the quantity of pollution-removing agent injected into the exhaust line is increased.

2.  The method according to the preceding claim, for which said increase of the quantity of pollution-removing agent to be injected is carried out as long as the quantity of agent to be injected extrapolated for the remaining distance (Drp) to be travelled up to the next filling is not greater than the quantity of agent remaining in the reservoir.

3.  The method according to any one of the preceding claims, in which the initially estimated average consumption (Ci) for the remaining distance to be travelled is replaced by an updated average consumption (Cmr) for the remaining distance to be travelled when said updated average consumption (Cmr) is greater than said initially estimated average consumption (Ci), the updated average consumption (Cmr) for the remaining distance to be travelled being determined according to the equation:

$$Cmr = (V-Qcr)/(Dc - Ddp)$$

V being the capacity of the reservoir,
Qcr being the total quantity of the agent actually consumed,
Dc being the predetermined distance between two fillings of said reservoir,
Ddp being the distance already travelled.

4.  The method according to the preceding claim, for which, if the total quantity (Qcr) of the agent actually consumed is less than the total quantity of the agent based on the initially estimated average consumption (Ci) for the remaining distance to be travelled, the quantity of pollution-removing agent injected into the exhaust line is recalculated as a function of the updated average consumption (Cmr) for the remaining distance to be travelled, said updated average consumption (Cmr) replacing said initially estimated average consumption (Ci).

5.  The method according to any one of the two preceding claims, for which, after each mode of propulsion of the hybrid vehicle, the calculation is carried out of the total quantity (Qcr) of the agent actually consumed and of the remaining distance (Drp) to be travelled before the next filling of the reservoir, the calculation of the total quantity (Qcr) actually consumed being made by addition to the preceding total quantity of agent actually consumed of the quantity consumed during said mode.

6.  The method according to any one of the three preceding claims, for which the calculation is carried out of the total quantity (Qcr) of the agent actually consumed and of the remaining distance (Drp) to be travelled before the next filling of the reservoir at a regular time interval or regular interval of distance travelled.

7.  The method according to any one of the two preceding claims, for which the calculation of the total quantity (Qcr) of the agent actually consumed is corrected as a function of a measurement of the filling level of the reservoir.

8.  The method according to any one of the preceding claims, for which the depollution is carried out by a method of selective catalytic reduction SCR, the pollution-removing agent being an SCR reducing agent.

9.  A device for adjusting the consumption of a pollution-removing agent for implementing the method according to any one of the preceding claims, the pollution-removing agent forming part of a pollution-removing system and being injected from a reservoir into the exhaust line of the heat engine of a hybrid vehicle, the pollution-removing system including an overall supervisor adjusting the injected quantity of agent as a function of an initially estimated average consumption (Ci) for the remaining distance to be travelled, said device being **characterized in that** it includes means for calculation of an updated average consumption (Cmr) for the remaining distance to be travelled, means for comparison of said updated average consumption (Cmr) with said initially estimated average consumption (Ci) and, if said updated average consumption (Cmr) is greater than said initially estimated average consumption (Ci), means for imposition on the overall supervisor of the replacement of said initially estimated average consumption (Ci) by said updated average consumption (Cmr).

10. A hybrid vehicle, including a heat engine associated with at least one engine other than a heat engine, and a pollution-removing system by injection from a reservoir of a pollution-removing agent into the exhaust line of the heat engine, **characterized in that** it is designed for the implementation of the method according to any one of Claims 1 to 8 or **in that** it includes a device according to the preceding claim.

V

0km      5.000km      10.000km      15.000km      20.000km

**Fig. 1**

C

1L/1000km

0,8L/1000km

0,6L/1000km

0,4L/1000km

0,2L/1000km

0,27L/1000km

0km          20.000km

**Fig. 2**

Cc

11,24L

6,57L

4,54L

5,4L

2,45L

4,6L

3,8L

2,3L

1,9L

1,5L

0km

20.000km

**FIG. 3**

Qi

Dc          Ddp

```
┌──────────────┐          ┌────────────────────┐
│     Qcr      │          │        Drp         │
└──────────────┘          └────────────────────┘
```

(1)

```
┌──────────────────┐
│       Cmr        │
└──────────────────┘
```

```
        Cmr >Ci
O          2          N
```

```
┌──────────────┐          ┌──────────────┐
│      4       │          │      3       │
└──────────────┘          └──────────────┘
```

( 1bis )

```
┌──────────────┐
│      5       │
└──────────────┘
```

FIG. 4

## RÉFÉRENCES CITÉES DANS LA DESCRIPTION

**Documents brevets cités dans la description**

- FR 2929644 A

- US 2008250774 A1